# EUROPÄISCHE PATENTANMELDUNG

(11) **EP 3 839 427 A1**
(43) Veröffentlichungstag der Anmeldung: **23.06.2021**
(21) Anmeldenummer: 19216513.2
(22) Anmeldetag: 16.12.2019
(51) Int. Cl.: G01C 15/00, G02B 26/10, G02B 27/09

(54) **LASERSYSTEM ZUR ERZEUGUNG EINER LINIENFÖRMIGEN LASERMARKIERUNG AUF EINER PROJEKTIONSFLÄCHE**

(71) Anmelder: Hilti Aktiengesellschaft, 9494 Schaan (LI)
(72) Erfinder: Dang, Lieu-Kim, 9473 Gams (CH)
(74) Vertreter: Hilti Aktiengesellschaft Corporate Intellectual Property

(57) **Zusammenfassung**

Lasersystem (10) zur Erzeugung einer linienförmigen Lasermarkierung (38) auf einer Projektionsfläche (37), aufweisend eine Laserstrahlquelle (11), die einen Laserstrahl (28) erzeugt und entlang einer Ausbreitungsrichtung (29) aussendet, eine Versatzeinrichtung (16) mit einer ersten Grenzfläche (21), an der eine erste Umlenkung des Laserstrahls erfolgt, und einen Kegelspiegel (14), der als gerader Kegel mit einer Kegelachse (15) und einer reflektierenden Mantelfläche (26) ausgebildet ist, wobei der Kegelspiegel (14) im Strahlengang des Laserstrahls hinter der Versatzeinrichtung (16) angeordnet ist. Die Versatzeinrichtung (16) ist um eine Rotationsachse (17) drehbar ausgebildet, die koaxial zur Kegelachse (15) angeordnet ist.

## Beschreibung

### Technisches Gebiet

Die vorliegende Erfindung betrifft ein Lasersystem zur Erzeugung einer linienförmigen Lasermarkierung auf einer Projektionsfläche gemäß dem Oberbegriff des Anspruchs 1.

### Stand der Technik

Um Nivellier- oder Markierungsarbeiten im Innen- und Außenbereich durchzuführen, sind Lasersysteme bekannt, die auf einer Projektionsfläche eine linienförmige Lasermarkierung erzeugen. Bei diesen Lasersystemen wird unterschieden zwischen Rotationslasern, die die linienförmige Lasermarkierung durch Rotation einer Strahlumlenkoptik um eine Rotationsachse erzeugen, und Linienlasern, die die linienförmige Lasermarkierung mithilfe einer Strahlformungsoptik, beispielsweise einer Zylinderlinse, einem Prisma oder einem Kegelspiegel, erzeugt. Damit die bekannten Lasersysteme ohne Schutzmaßnahmen in Form von Schutzbrillen und Reflektoren eingesetzt werden können, muss die Laserleistung begrenzt werden, um Schäden des menschlichen Auges zu verhindern. Für Lasersysteme der Laserklasse 2 oder 2M beträgt die maximal zulässige Laserleistung 1 mW.

Durch die Begrenzung der Laserleistung auf Werte kleiner als 1 mW weisen bekannte Lasersysteme der Laserklasse 2 oder 2M den Nachteil auf, dass die linienförmige Lasermarkierung auf der Projektionsfläche schlecht sichtbar ist. Dabei gilt, dass die linienförmige Lasermarkierung umso schlechter sichtbar ist, je breiter die Lasermarkierung auf der Projektionsfläche ist, da die Sichtbarkeit mit sinkender Leistungsdichte abnimmt. Außerdem ist die Qualität der linienförmigen Lasermarkierung auf der Projektionsfläche vom Abstand des Lasersystem zur Projektionsfläche abhängig.

EP 2 411 762 B1 offenbart den typischen Aufbau eines Lasersystems zur Erzeugung einer linienförmigen Lasermarkierung mit einem Öffnungswinkel von 360°. Das Lasersystem umfasst eine Laserstrahlquelle, die einen divergenten Laserstrahl erzeugt und entlang einer Ausbreitungsrichtung aussendet, eine als Kollimationsoptik ausgebildete Strahlformungsoptik, die den divergenten Laserstrahl in einen kollimierten Laserstrahl umformt, und einen Kegelspiegel, der als gerader Kegel mit einer Kegelachse und einer reflektierenden Mantelfläche ausgebildet ist, wobei der Kegelspiegel im Strahlengang des Laserstrahls hinter der Kollimationsoptik angeordnet ist und die Kegelachse koaxial zur optischen Achse der Kollimationsoptik ausgerichtet ist.

Das aus EP 2 411 762 B1 bekannte Lasersystem weist den Nachteil auf, dass auf der Projektionsfläche keine scharf begrenzte Lasermarkierung erzeugt wird. Die Lasermarkierung besteht aus einer Hauptlinie und mindestens einer Nebenlinie. Die Ursache für das Auftreten mehrerer Linien liegt darin, dass die Laserstrahlquelle einen Laserstrahl mit mehreren Beugungsordnungen erzeugt, die an der Kegelspitze des Kegelspiegels unterschiedlich gebeugt werden und auf der Projektionsfläche als benachbarte Linien auftreten.

US 7,497,018 B2 offenbart ein bekanntes Lasersystem zur Erzeugung einer Lasermarkierung auf einer Projektionsfläche. Das Lasersystem umfasst eine Laserstrahlquelle, eine Kollimationsoptik mit einer ersten optischen Achse, einen Kegelspiegel mit einer Kegelachse und einen Umlenkspiegel, der zwischen der Kollimationsoptik und dem Kegelspiegel angeordnet ist. Die Laserstrahlquelle erzeugt einen divergenten Laserstrahl, der auf die Kollimationsoptik trifft und in einen kollimierten Laserstrahl umgeformt wird. Der kollimierte Laserstrahl trifft auf den Umlenkspiegel, der den Laserstrahl um 90° in Richtung des Kegelspiegels umlenkt. Der Kegelspiegel erzeugt einen Laserstrahl, der sich in einer Ebene senkrecht zum kollimierten Laserstrahl ausbreitet und auf der Projektionsfläche eine linienförmige Lasermarkierung erzeugt. Die Kegelachse des Kegelspiegels ist parallel versetzt zur ersten optischen Achse der Kollimationsoptik angeordnet. Durch den Parallelversatz trifft das Zentrum des kollimierten Laserstrahls nicht auf die Kegelspitze, sondern auf die reflektierende Mantelfläche des Kegelspiegels.

Das aus US 7,497,018 B2 bekannte Lasersystem weist den Nachteil auf, dass auf einer Projektionsfläche keine geschlossene linienförmige Lasermarkierung mit einem Öffnungswinkel von 360° erzeugt wird. Die linienförmige Lasermarkierung auf der Projektionsfläche ist auf Öffnungswinkel kleiner als 180° begrenzt. Das Lasersystem ist nicht geeignet, um eine geschlossene linienförmige Lasermarkierung zu erzeugen.

### Darstellung der Erfindung

Die Aufgabe der vorliegenden Erfindung besteht in der Entwicklung eines Lasersystems, mit dem auf einer Projektionsfläche eine scharf begrenzte, gut sichtbare linienförmige Lasermarkierung mit einem Öffnungswinkel von 360° erzeugt werden kann. Außerdem soll das Lasersystem möglichst kompakt ausgebildet sein.

Diese Aufgabe wird bei dem eingangs genannten Lasersystem erfindungsgemäß durch die Merkmale des unabhängigen Anspruchs 1 gelöst. Vorteilhafte Weiterbildungen sind in den abhängigen Ansprüchen angegeben.

Erfindungsgemäß ist das Lasersystem dadurch gekennzeichnet, dass die Versatzeinrichtung um eine Rotationsachse drehbar ausgebildet ist, wobei die Rotationsachse der Versatzeinrichtung koaxial zur Kegelachse angeordnet ist. Das erfindungsgemäße Lasersystem erzeugt eine linienförmige Lasermarkierung, die einen Öffnungswinkel von 360° aufweist und die auf der Projektionsfläche scharf begrenzt und gut sichtbar ist. Durch die Versatzeinrichtung wird die optische Achse des Laserstrahls gegenüber der Kegelachse verschoben und der Laserstrahl trifft nicht auf die Kegelspitze des Kegelspiegels, so dass Beugungseffekte an der Kegelspitze, die zu einer unscharfen Lasermarkierung führen können, reduziert sind.

Der Kegelspiegel erzeugt einen linienförmigen Laserstrahl mit einem Öffnungswinkel, der kleiner als 180° ist. Durch die Rotation der Versatzeinrichtung wird auf der Projektionsfläche eine linienförmige Lasermarkierung mit einem Öffnungswinkel von 360° erzeugt. Das erfindungsgemäße Lasersystem hat gegenüber einem herkömmlichen Rotationslaser den Vorteil, dass geringere Rotationsgeschwindigkeiten möglich sind, die zu einer besseren Sichtbarkeit der Lasermarkierung auf der Projektionsfläche führen. Bei herkömmlichen Rotationslasern muss der punktförmige Laserstrahl mit einer hohen Rotationsgeschwindigkeit bewegt werden, um für das Auge des Benutzers auf der Projektionsfläche eine geschlossene linienförmige Lasermarkierung zu erzeugen.

Bevorzugt umfasst die Versatzeinrichtung eine zweite Grenzfläche, an der eine zweite Umlenkung des Laserstrahls erfolgt, wobei die Ausbreitungsrichtung eines in die Versatzeinrichtung eintretenden Laserstrahls parallel zur Ausbreitungsrichtung eines aus der Versatzeinrichtung austretenden Laserstrahls angeordnet ist. Eine Versatzeinrichtung, die eine erste und zweite Grenzfläche aufweist, ermöglicht einen kompakten Aufbau des Lasersystems. Bei einer Versatzeinrichtung, die nur eine erste Grenzfläche aufweist, müssen die Laserstrahlquelle und die Versatzeinrichtung sowie weitere optische Elemente, die zwischen Laserstrahlquelle und Versatzeinrichtung angeordnet sind, drehbar ausgebildet sein; bei einer Versatzeinrichtung mit einer ersten und zweiten Grenzfläche ist es ausreichend, dass die Versatzeinrichtung drehbar ausgebildet ist.

Bevorzugt weist das Lasersystem eine als Kollimationsoptik ausgebildete erste Strahlformungsoptik mit einer ersten optischen Achse auf, wobei die erste optische Achse parallel zur Kegelachse ausgerichtet ist. Die Erweiterung des erfindungsgemäßen Lasersystems um die Kollimationsoptik hat den Vorteil, dass ein divergenter Laserstrahl kollimiert werden kann. Auf der Projektionsfläche ist der kollimierte Laserstrahl gegenüber einem divergenten Laserstrahl besser sichtbar, da die Leistungsdichte grösser ist. Eine linienförmige Lasermarkierung ist umso besser sichtbar, je schmaler die Lasermarkierung auf der Projektionsfläche ist, da die Sichtbarkeit mit steigender Leistungsdichte zunimmt.

Bevorzugt weist das Lasersystem eine als Fokussieroptik mit einer Brennweite ausgebildete zweite Strahlformungsoptik mit einer zweiten optischen Achse auf, wobei die zweite Strahlformungsoptik im Strahlengang des Laserstrahls zwischen der Laserstrahlquelle und der ersten Strahlformungsoptik angeordnet ist und die zweite optische Achse parallel zur Kegelachse ausgerichtet ist. Die Erweiterung des erfindungsgemäßen Lasersystems um eine Fokussieroptik hat den Vorteil, dass der Strahldurchmesser des Laserstrahls angepasst werden kann. Als Fokussieroptik ist ein optisches Element definiert, das eine endliche Brennweite aufweist und einen auftreffenden Laserstrahl fokussiert, wobei der Strahldurchmesser des Laserstrahls in der Fokuslage minimal ist. Ein fokussierter Laserstrahl weist im Bereich der Fokuslage einen kleineren Strahldurchmesser auf als ein nicht-fokussierter Laserstrahl. Der kleinere Strahldurchmesser hat den Vorteil, dass die erste Strahlformungsoptik, die Versatzeinrichtung und der Kegelspiegel kleinere Abmessungen aufweisen können.

Besonders bevorzugt ist die Brennweite der Fokussieroptik verstellbar. Eine Fokussieroptik mit verstellbarer Brennweite hat den Vorteil, dass die Breite der linienförmigen Lasermarkierung auf der Projektionsfläche mittels der Fokussieroptik verändert werden kann. Je schmaler die linienförmige Lasermarkierung auf der Projektionsfläche ist, umso genauer kann der Bediener die Nivellier- oder Markierungsarbeiten ausführen. Außerdem ist eine scharf begrenzte linienförmige Lasermarkierung für den Bediener besser sichtbar, da die verfügbare Leistung von maximal 1 mW auf eine kleinere Fläche verteilt wird und eine höhere Leistungsdichte resultiert.

In einer bevorzugten Ausführung ist die Versatzeinrichtung als reflektierende Versatzeinrichtung ausgebildet und die Umlenkung des Laserstrahls an der ersten Grenzfläche und zweiten Grenzfläche erfolgt durch Reflexion. Ein erfindungsgemäßes Lasersystem mit einer reflektierenden Versatzeinrichtung hat den Vorteil, dass die erste Grenzfläche und zweite Grenzfläche in separate optische Elemente integriert werden können, die unabhängig voneinander verstellbar sein können.

Besonders bevorzugt ist die erste Grenzfläche um eine erste Kippachse und/oder die zweite Grenzfläche um eine zweite Kippachse verstellbar ausgebildet, wobei die erste Kippachse und zweite Kippachse senkrecht zur Rotationsachse ausgerichtet sind. Eine reflektierende erste Grenzfläche, die um eine erste Kippachse verstellbar ist, und/oder eine reflektierende zweite Grenzfläche, die um eine zweite Kippachse verstellbar ist, bietet die Möglichkeit, den Einfallswinkel des Laserstrahls auf die Mantelfläche zu verändern. Ziel ist es, mit dem Kegelspiegel einen linienförmigen Laserstrahl mit einer Ausbreitungsebene zu erzeugen, die senkrecht zur Kegelachse verläuft.

In einer Weiterentwicklung weist das Lasersystem eine Distanzmesseinrichtung auf, wobei die Distanzmesseinrichtung geeignet ist, einen Abstand des Lasersystems zur Projektionsfläche zu bestimmen. Die Erweiterung des erfindungsgemäßen Lasersystems um eine Distanzmesseinrichtung hat den Vorteil, dass die Brennweite der Fokussieroptik an den Abstand des Lasersystems zur Projektionsfläche angepasst werden kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform eines erfindungsgemäßen Lasersystems, das eine Laserstrahlquelle, eine Kollimationsoptik, eine Versatzeinrichtung, die als reflektierende Versatzeinrichtung ausgebildet ist, und einen Kegelspiegel aufweist;
- FIG. 2: eine zweite Ausführungsform eines erfindungsgemäßen Lasersystems, das sich durch eine Fokussieroptik von der ersten Ausführungsform des Lasersystems unterscheidet;
- FIG. 3: eine dritte Ausführungsform eines erfindungsgemäßen Lasersystems, das eine Laserstrahlquelle, eine Kollimationsoptik, eine Versatzeinrichtung, die als transmittierende Versatzeinrichtung ausgebildet ist, und einen Kegelspiegel aufweist;
- FIG. 4: eine vierte Ausführungsform eines erfindungsgemäßen Lasersystems, das sich durch eine Fokussieroptik von der dritten Ausführungsform des Lasersystems unterscheidet; und
- FIG. 5: eine fünfte Ausführungsform eines erfindungsgemäßen Lasersystems, das sich durch eine Fokussieroptik, die in ihren fokussierenden Eigenschaften verstellbar ist, von der zweiten Ausführungsform des Lasersystems unterscheidet.

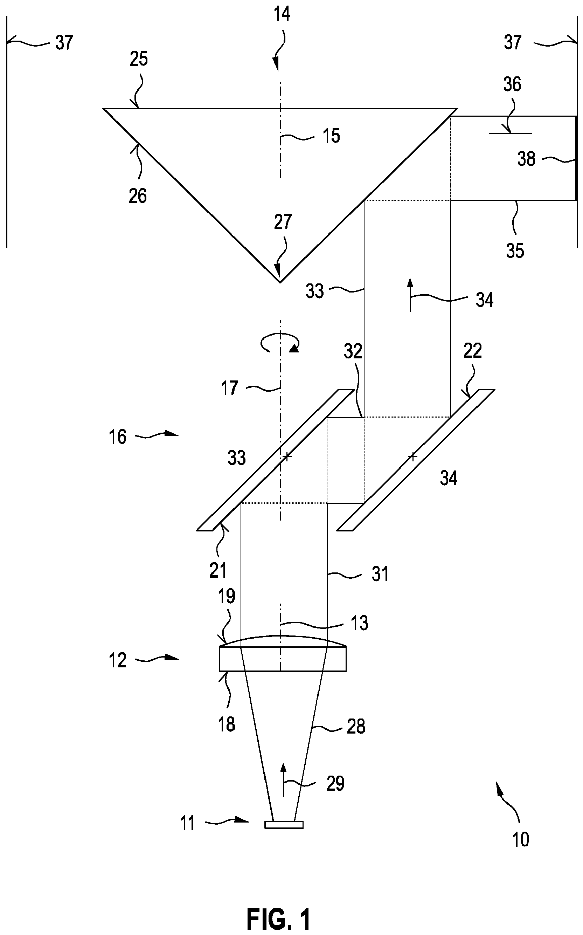

**FIG. 1** zeigt eine erste Ausführungsform eines erfindungsgemäßen Lasersystems 10 zur Erzeugung einer linienförmigen Lasermarkierung auf einer Projektionsfläche. Das Lasersystem 10, das im Folgenden als erstes Lasersystem 10 bezeichnet wird, umfasst eine Laserstrahlquelle 11, eine erste Strahlformungsoptik **12** mit einer ersten optischen Achse **13,** einen Kegelspiegel 14 mit einer Kegelachse **15** und eine Versatzeinrichtung **16,** die um eine Rotationsachse 17 drehbar ist. Die Komponenten des ersten Lasersystems 10 sind in der Reihenfolge Laserstrahlquelle 11, erste Strahlformungsoptik 12, Versatzeinrichtung 16 und Kegelspiegel 14 angeordnet. Dabei sind die erste optische Achse 13 der ersten Strahlformungsoptik 12, die Rotationsachse 17 der Versatzeinrichtung 16 und die Kegelachse 15 des Kegelspiegels 14 koaxial zueinander angeordnet.

Die Laserstrahlquelle 11 kann als Halbleiterlaser mit einer Wellenlänge im sichtbaren Spektrum ausgebildet sein, beispielsweise als roter Halbleiterlaser mit einer Wellenlänge von 635 nm oder als grüner Halbleiterlaser mit einer Wellenlänge zwischen 510 und 555 nm. Die Eigenschaften der weiteren Komponenten des ersten Lasersystems 10 sind an die Wellenlänge der Laserstrahlquelle 11 angepasst.

Hinter der Laserstrahlquelle 11 ist die erste Strahlformungsoptik 12 angeordnet, die als Kollimationsoptik ausgebildet ist und die einen auftreffenden Laserstrahl umformt. Die Kollimationsoptik 12 weist eine plane Eintrittsfläche **18** und eine gekrümmte Austrittsfläche **19** auf. Alternativ kann die Eintrittsfläche 18 als gekrümmte Fläche und die Austrittsfläche 19 als plane Fläche ausgebildet sein oder die Ein- und Austrittsflächen 18, 19 sind als gekrümmte Flächen ausgebildet. Als erste optische Achse 13 der Kollimationsoptik 12 ist eine Gerade definiert, die durch den Krümmungsmittelpunkt der gekrümmten Fläche verläuft und senkrecht auf der planen Fläche steht oder bei zwei gekrümmten Flächen durch die Krümmungsmittelpunkte der gekrümmten Flächen verläuft.

Hinter der Kollimationsoptik 12 ist die Versatzeinrichtung 16 angeordnet. Die Versatzeinrichtung 16 ist als reflektierende Versatzeinrichtung mit einem ersten Spiegel und einem zweiten Spiegel ausgebildet. Der erste Spiegel weist eine erste Grenzfläche **21** und der zweite Spiegel eine zweite Grenzfläche **22** auf. Ein auftreffender Laserstrahl wird an der ersten und zweiten Grenzfläche 21, 22 reflektiert. Dabei hängt der Reflexionsgrad der ersten und zweiten Grenzfläche 21, 22 unter anderem vom Einfallswinkel und der Polarisation des Laserstrahls sowie vom Brechungsindex des ersten und zweiten Spiegels ab. Die Aufgabe der Versatzeinrichtung 16 besteht darin, die Ausbreitungsrichtung eines von der Laserstrahlquelle 11 ausgesandten Laserstrahls so gegenüber der Kegelachse 15 zu verschieben, dass der Laserstrahl nicht auf die Kegelspitze trifft. Um den Einfallswinkel des Laserstrahls zu verändern, kann die Ausbreitungsrichtung des Laserstrahls und/oder die Neigung der ersten und zweiten Grenzfläche 21, 22 verstellt werden. Die erste Grenzfläche 21 kann um eine erste Kippachse **23** und die zweite Grenzfläche 21 um eine zweite Kippachse **24** verstellt werden.

Hinter der Versatzeinrichtung 16 ist der Kegelspiegel 14 angeordnet. Der Kegelspiegel 14 ist als Abschnitt eines geraden Kegels ausgebildet. Ein Kegel ist von einer Grundfläche und einer Mantelfläche begrenzt, wobei die Grundfläche bei einem geraden Kegel senkrecht zur Kegelachse angeordnet ist. Die Oberfläche des Kegelspiegels 14 umfasst eine kreisförmige Grundfläche **25,** eine Mantelfläche **26** und eine Kegelspitze **27,** wobei die Kegelachse 15 senkrecht zur Grundfläche 25 angeordnet ist und durch die Kegelspitze 27 verläuft. Die Mantelfläche 26 ist für die Wellenlänge der Laserstrahlquelle 11 als reflektierende Mantelfläche ausgebildet und ein auf die Mantelfläche 26 auftreffender Laserstrahl wird an der Mantelfläche 26 überwiegend reflektiert. Der Reflexionsgrad der Mantelfläche 26 hängt unter anderem vom Einfallswinkel eines auftreffenden Laserstrahls, von der Polarisation des auftreffenden Laserstrahls und vom Brechungsindex des Kegelspiegels 15 ab.

Die Laserstrahlquelle 11 erzeugt einen divergenten Laserstrahl **28,** der entlang einer Ausbreitungsrichtung **29** ausgesandt wird und auf die erste Strahlformungsoptik 16 gerichtet ist. Ohne ein zusätzliches optisches Element in der Laserstrahlquelle 11 ist der Laserstrahl 28 divergent. Als optische Achse des Laserstrahls 28 ist die Symmetrieachse der Strahlverteilung definiert.

Der Laserstrahl 28 trifft auf die Kollimationsoptik 12, die den divergenten Laserstrahl 28 in einen kollimierten Laserstrahl **31** umformt, der auf die Versatzeinrichtung 16 gerichtet ist. Der kollimierte Laserstrahl 31 trifft auf die erste Grenzfläche 21, an der eine erste Umlenkung des kollimierten Laserstrahls 31 erfolgt, und auf die zweite Grenzfläche 22, an der eine zweite Umlenkung des kollimierten Laserstrahls 31 erfolgt. Der an der ersten Grenzfläche 21 umgelenkte Laserstrahl wird als einfach umgelenkter Laserstrahl **32** und der an der zweiten Grenzfläche 22 umgelenkte Laserstrahl als zweifach umgelenkter Laserstrahl **33** bezeichnet. Durch die zweifache Umlenkung des Laserstrahls an der ersten und zweiten Grenzfläche 21, 22 der Versatzeinrichtung 16 ist die Ausbreitungsrichtung des Laserstrahls gegenüber der Kegelachse 15 verschoben und der Laserstrahl trifft nicht auf die Kegelspitze 27. Der zweifach umgelenkte Laserstrahl 33 breitet sich in einer parallelen Ausbreitungsrichtung **34** aus und wird an der Mantelfläche 26 des Kegelspiegels 14 umgelenkt. Der Kegelspiegel 14 erzeugt einen Laserstrahl **35,** der sich in einer Ausbreitungsebene **36** ausbreitet und auf einer Projektionsfläche **37** eine linienförmige Lasermarkierung **38** erzeugt.

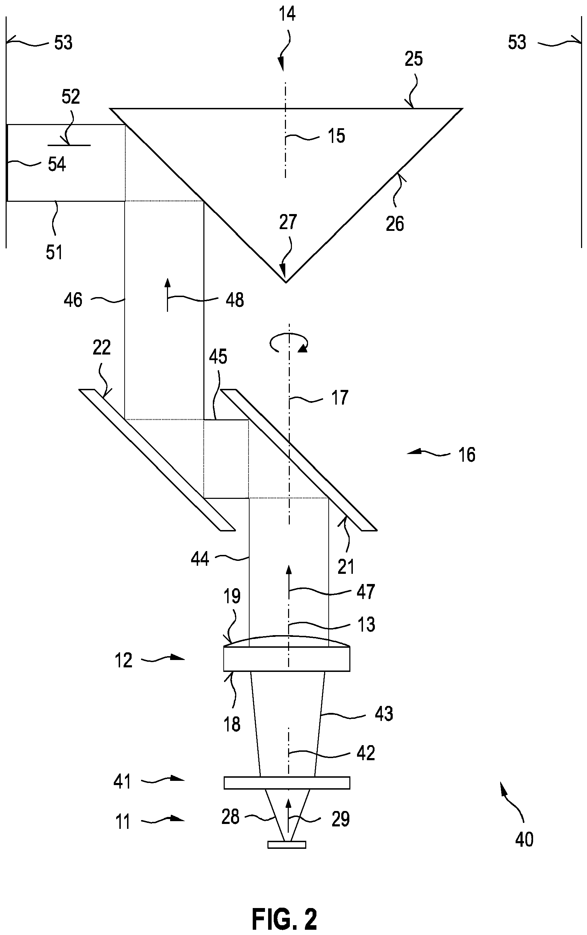

**FIG. 2** zeigt eine zweite Ausführungsform eines erfindungsgemäßen Lasersystems **40** zur Erzeugung einer linienförmigen Lasermarkierung auf einer Projektionsfläche. Das Lasersystem 40 der FIG. 2, das im Folgenden als zweites Lasersystem 40 bezeichnet wird, unterscheidet sich vom ersten Lasersystem 10 der FIG. 1 durch eine zweite Strahlformungsoptik **41** mit einer zweiten optischen Achse **42,** wobei die zweite Strahlformungsoptik 41 als Fokussieroptik ausgebildet ist.

Das zweite Lasersystem 40 umfasst die Laserstrahlquelle 11, die erste Strahlformungsoptik 12 mit der ersten optischen Achse 13, den Kegelspiegel 14 mit der Kegelachse 15, die Versatzeinrichtung 16 und die zweite Strahlformungsoptik 41 mit der zweiten optischen Achse 42. Die Komponenten des zweiten Lasersystems 40 sind in der Reihenfolge Laserstrahlquelle 11, zweite Strahlformungsoptik 41 (Fokussieroptik), erste Strahlformungsoptik 12 (Kollimationsoptik), Versatzeinrichtung 16 und Kegelspiegel 14 angeordnet. Dabei sind die erste optische Achse 13 der ersten Strahlformungsoptik 12, die zweite optische Achse 42 der zweiten Strahlformungsoptik 41 und die Kegelachse 15 des Kegelspiegels 14 koaxial zueinander angeordnet.

Die Laserstrahlquelle 11 erzeugt den divergenten Laserstrahl 28, der entlang der Ausbreitungsrichtung 29 ausgesandt wird und auf die Fokussieroptik 41 gerichtet ist. Der divergente Laserstrahl 28 trifft auf die Fokussieroptik 41, die einen fokussierten Laserstrahl **43** erzeugt. Der fokussierte Laserstrahl 43 trifft auf die Kollimationsoptik 12, die den fokussierten Laserstrahl 43 in einen kollimierten Laserstrahl **44** umformt.

Der kollimierte Laserstrahl 44 trifft auf die Versatzeinrichtung 16, die die erste und zweite Grenzfläche 21, 22 umfasst. Der kollimierte Laserstrahl 44 trifft auf die erste Grenzfläche 21, an der eine erste Umlenkung des kollimierten Laserstrahls 44 erfolgt, und auf die zweite Grenzfläche 22, an der eine zweite Umlenkung des kollimierten Laserstrahls 44 erfolgt. Der an der ersten Grenzfläche 21 umgelenkte Laserstrahl wird als einfach umgelenkter Laserstrahl **45** und der an der zweiten Grenzfläche 22 umgelenkte Laserstrahl als zweifach umgelenkter Laserstrahl **46** bezeichnet. Die erste und zweite Grenzfläche 21, 22 sind so zueinander ausgerichtet, dass eine Ausbreitungsrichtung **47** des in die Versatzeinrichtung 16 eintretenden kollimierten Laserstrahls 44 parallel zu einer Ausbreitungsrichtung **48** des aus der Versatzeinrichtung 16 austretenden zweifach umgelenkten Laserstrahls 46 angeordnet ist.

Der zweifach umgelenkte Laserstrahl 46 trifft auf die Mantelfläche 26 des Kegelspiegels 14 und wird an der Mantelfläche 26 umgelenkt. Der Kegelspiegel 14 erzeugt einen Laserstrahl **51,** der sich in einer Ausbreitungsebene **52** ausbreitet und auf einer Projektionsfläche **53** eine linienförmige Lasermarkierung **54** erzeugt.

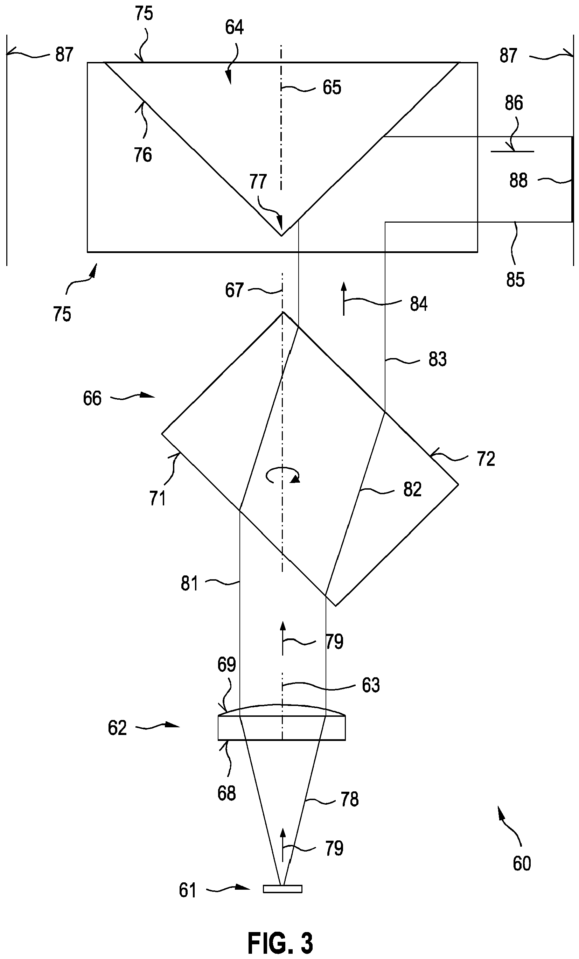

**FIG. 3** zeigt eine dritte Ausführungsform eines erfindungsgemäßen Lasersystems **60** zur Erzeugung einer linienförmigen Lasermarkierung auf einer Projektionsfläche. Das Lasersystem 60, das im Folgenden als drittes Lasersystem 60 bezeichnet wird, umfasst eine Laserstrahlquelle **61,** eine erste Strahlformungsoptik **62** mit einer ersten optischen Achse **63,** einen Kegelspiegel **64** mit einer Kegelachse **65,** und eine Versatzeinrichtung **66,** die um eine Rotationsachse **67** drehbar ist. Die Komponenten des dritten Lasersystems 60 sind in der Reihenfolge Laserstrahlquelle 61, erste Strahlformungsoptik 62 (Kollimationsoptik), Versatzeinrichtung 66 und Kegelspiegel 64 angeordnet. Dabei sind die erste optische Achse 63 der ersten Strahlformungsoptik 62, die Rotationsachse 67 der Versatzeinrichtung 66 und die Kegelachse 65 des Kegelspiegels 64 koaxial zueinander angeordnet.

Die Laserstrahlquelle 61 kann wie die Laserstrahlquelle 11 des ersten Lasersystems 10 als Halbleiterlaser mit einer Wellenlänge im sichtbaren Spektrum ausgebildet sein. Die Eigenschaften der weiteren Komponenten des dritten Lasersystems 60 sind an die Wellenlänge der Laserstrahlquelle 61 angepasst.

Die erste Strahlformungsoptik 62 ist als Kollimationsoptik ausgebildet und hinter der Laserstrahlquelle 61 angeordnet. Die Kollimationsoptik 62 weist eine lichtbrechende Eintrittsfläche **68** und eine lichtbrechende Austrittsfläche **69** auf. Im Ausführungsbeispiel ist die Eintrittsfläche 68 als plane erste Fläche und die Austrittsfläche 69 als gekrümmte zweite Fläche ausgebildet. Alternativ kann die Eintrittsfläche 68 als gekrümmte Fläche und die Austrittsfläche 69 als plane Fläche ausgebildet sein oder die Ein- und Austrittsflächen 68, 69 sind als gekrümmte Flächen ausgebildet. Als erste optische Achse 63 der Kollimationsoptik 62 ist eine Gerade definiert, die durch den Krümmungsmittelpunkt der gekrümmten Fläche verläuft und senkrecht auf der planen Fläche steht oder bei zwei gekrümmten Flächen durch die Krümmungsmittelpunkte der gekrümmten Flächen verläuft.

Hinter der Kollimationsoptik 62 ist die Versatzeinrichtung 66 angeordnet. Die Versatzeinrichtung 66 ist als transmittierende Versatzeinrichtung mit einer ersten Grenzfläche **71** und einer zweiten Grenzfläche **72** ausgebildet. Ein auftreffender Laserstrahl wird an der ersten und zweiten Grenzfläche 71, 72 abgelenkt. Dabei hängt der Brechungsgrad der ersten und zweiten Grenzfläche 71, 72 unter anderem vom Einfallswinkel und der Polarisation des Laserstrahls sowie vom Brechungsindex der Versatzeinrichtung 66 ab. Die Aufgabe der Versatzeinrichtung 66 besteht darin, die Ausbreitungsrichtung eines von der Laserstrahlquelle 61 ausgesandten Laserstrahls so gegenüber der Kegelachse 65 zu verschieben, dass der Laserstrahl nicht auf die Kegelspitze trifft. Die erste und zweite Grenzfläche 71, 72 sind in eine Glasplatte **73** integriert, die um eine Kippachse **74** verstellbar ist.

Hinter der Versatzeinrichtung 66 ist der Kegelspiegel 64 angeordnet. Der Kegelspiegel 64 ist als kegelförmiger Ausschnitt in einen transparenten zylinderförmigen Grundkörper **75** integriert. Ein Zylinder ist von zwei parallelen, ebenen Flächen, die als Grundfläche und Deckfläche bezeichnet werden, und einer Mantelfläche begrenzt; bei einem geraden Zylinder sind die Grund- und Deckfläche senkrecht zu einer Zylinderachse angeordnet. Als Materialien für den Grundkörper 75 eignen sich beispielsweise Glas und Kunststoffe. Der kegelförmige Ausschnitt umfasst eine kegelförmige Mantelfläche **76** und eine Kegelspitze **77.**

Der Reflexionsgrad der Mantelfläche 76 hängt unter anderem vom Einfallswinkel und der Polarisation des Laserstrahls sowie dem Brechungsindex des Grundkörpers 68 ab. Damit der einfallende Laserstrahl möglichst vollständig an der Mantelfläche 76 reflektiert wird, sollte der Einfallswinkel die Bedingung der Totalreflektion erfüllen. Der reflektierte Anteil kann alternativ oder zusätzlich dadurch erhöht werden, dass die Mantelfläche 76 mit einer hochreflektierenden Beschichtung versehen wird. Je höher der reflektierte Anteil des Laserstrahls ist, umso größer ist die Intensität und umso besser ist die Sichtbarkeit der linienförmigen Lasermarkierung auf der Projektionsfläche.

Die Laserstrahlquelle 61 erzeugt einen divergenten Laserstrahl **78,** der entlang einer Ausbreitungsrichtung **79** ausgesandt wird und auf die Kollimationsoptik 62 gerichtet ist. Der Laserstrahl 78 trifft auf die Kollimationsoptik 62, die den divergenten Laserstrahl 78 in einen kollimierten Laserstrahl **81** umformt, der auf die Versatzeinrichtung 66 gerichtet ist. Der kollimierte Laserstrahl 81 trifft auf die erste Grenzfläche 71, an der eine erste Umlenkung erfolgt, und auf die zweite Grenzfläche 72, an der eine zweite Umlenkung des kollimierten Laserstrahls 81 erfolgt. Der an der ersten Grenzfläche 71 umgelenkte Laserstrahl wird als einfach umgelenkter Laserstrahl **82** und der an der zweiten Grenzfläche 72 umgelenkte Laserstrahl als zweifach umgelenkter Laserstrahl **83** bezeichnet.

Durch die zweifache Umlenkung des Laserstrahls an der ersten und zweiten Grenzfläche 71, 72 der Versatzeinrichtung 66 ist die Ausbreitungsrichtung des Laserstrahls gegenüber der Kegelachse 65 verschoben und der Laserstrahl trifft nicht auf die Kegelspitze 77. Der zweifach umgelenkte Laserstrahl 83 breitet sich in einer parallelen Ausbreitungsrichtung **84** aus, tritt durch die Grundfläche des Grundkörpers 68 und wird an der Mantelfläche 76 des Kegelspiegels 64 umgelenkt. Der Kegelspiegel 64 erzeugt einen Laserstrahl **85,** der sich in einer Ausbreitungsebene **86** ausbreitet, durch die Mantelfläche des Grundkörpers 68 tritt und auf einer Projektionsfläche **87** eine linienförmige Lasermarkierung **88** erzeugt.

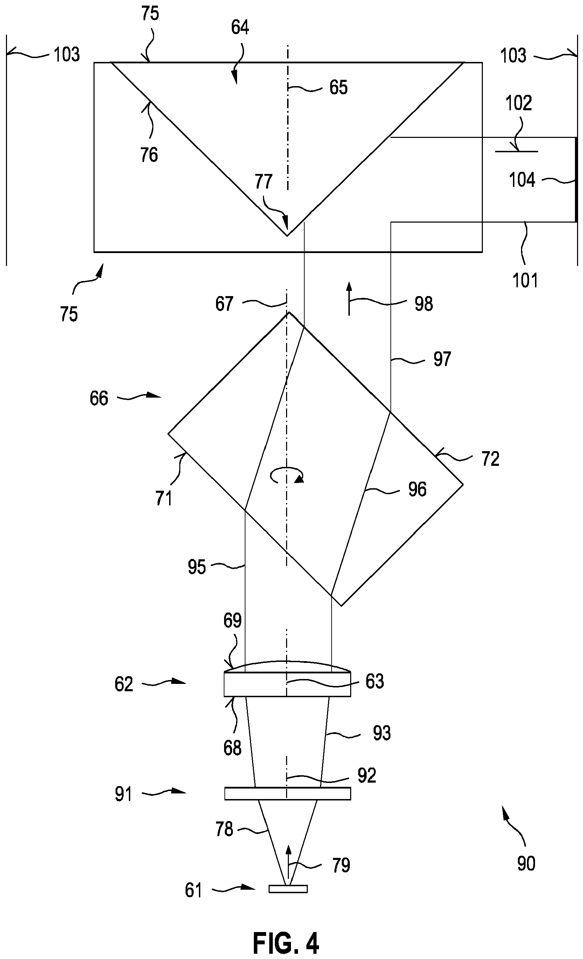

**FIG. 4** zeigt eine vierte Ausführungsform eines erfindungsgemäßen Lasersystems **90** zur Erzeugung einer linienförmigen Lasermarkierung auf einer Projektionsfläche. Das Lasersystem 90 der FIG. 4, das im Folgenden als viertes Lasersystem 90 bezeichnet wird, unterscheidet sich vom dritten Lasersystem 60 der FIG. 3 durch eine zweite Strahlformungsoptik **91** mit einer zweiten optischen Achse **92,** wobei die zweite Strahlformungsoptik 91 als Fokussieroptik ausgebildet ist.

Das vierte Lasersystem 90 umfasst die Laserstrahlquelle 61, die erste Strahlformungsoptik 62 mit der ersten optischen Achse 63, den Kegelspiegel 64 mit der Kegelachse 65, die Versatzeinrichtung 66 und die zweite Strahlformungsoptik 91 mit der zweiten optischen Achse 92. Die Komponenten des vierten Lasersystems 90 sind in der Reihenfolge Laserstrahlquelle 61, zweite Strahlformungsoptik 91 (Fokussieroptik), erste Strahlformungsoptik 62 (Kollimationsoptik), Versatzeinrichtung 66 und Kegelspiegel 64 angeordnet. Dabei sind die erste optische Achse 63 der ersten Strahlformungsoptik 62, die zweite optische Achse 92 der zweiten Strahlformungsoptik 91 und die Kegelachse 65 des Kegelspiegels 64 koaxial zueinander angeordnet.

Die Laserstrahlquelle 61 erzeugt den divergenten Laserstrahl 68, der entlang der Ausbreitungsrichtung 69 ausgesandt wird. Der divergente Laserstrahl 68 trifft auf die Fokussieroptik 91, die die Divergenz des Laserstrahls 68 verringert und einen fokussierten Laserstrahl **93** erzeugt. Der fokussierte Laserstrahl 93 trifft auf die Kollimationsoptik 62, die den fokussierten Laserstrahl 93 in einen kollimierten Laserstrahl **95** umformt.

Der kollimierte Laserstrahl 95 trifft auf die Versatzeinrichtung 66, die die erste und zweite Grenzfläche 71, 72 umfasst. Der kollimierte Laserstrahl 95 trifft auf die erste Grenzfläche 71, an der eine erste Umlenkung erfolgt, und auf die zweite Grenzfläche 72, an der eine zweite Umlenkung erfolgt. Der an der ersten Grenzfläche 71 umgelenkte Laserstrahl wird als einfach umgelenkter Laserstrahl **96** und der an der zweiten Grenzfläche 72 umgelenkte Laserstrahl als zweifach umgelenkter Laserstrahl **97** bezeichnet.

Durch die zweifache Umlenkung des Laserstrahls an der ersten und zweiten Grenzfläche 71, 72 der Versatzeinrichtung 66 ist die Ausbreitungsrichtung des Laserstrahls gegenüber der Kegelachse 65 verschoben. Der zweifach umgelenkte Laserstrahl 97 breitet sich in einer parallelen Ausbreitungsrichtung **98** aus und wird an der Mantelfläche 76 des Kegelspiegels 14 umgelenkt. Der Kegelspiegel 64 erzeugt einen Laserstrahl **101,** der sich in einer Ausbreitungsebene **102** ausbreitet und auf einer Projektionsfläche **103** eine linienförmige Lasermarkierung **104** erzeugt.

Die Fokussieroptik 91 kann als verstellbare Fokussieroptik ausgebildet sein, deren fokussierende Eigenschaften verändert werden und die eine Veränderung der Divergenz des fokussierten Laserstrahls ermöglicht. Um eine scharfe Lasermarkierung 104, d.h. eine Lasermarkierung mit einer geringen Breite, auf der Projektionsfläche 103 zu erzielen, sollte die Fokuslage auf der Projektionsfläche 103 liegen. Dazu wird der Abstand zwischen dem Lasersystem 90 und der Projektionsfläche 103 bestimmt und die Fokuslage an den Abstand angepasst.

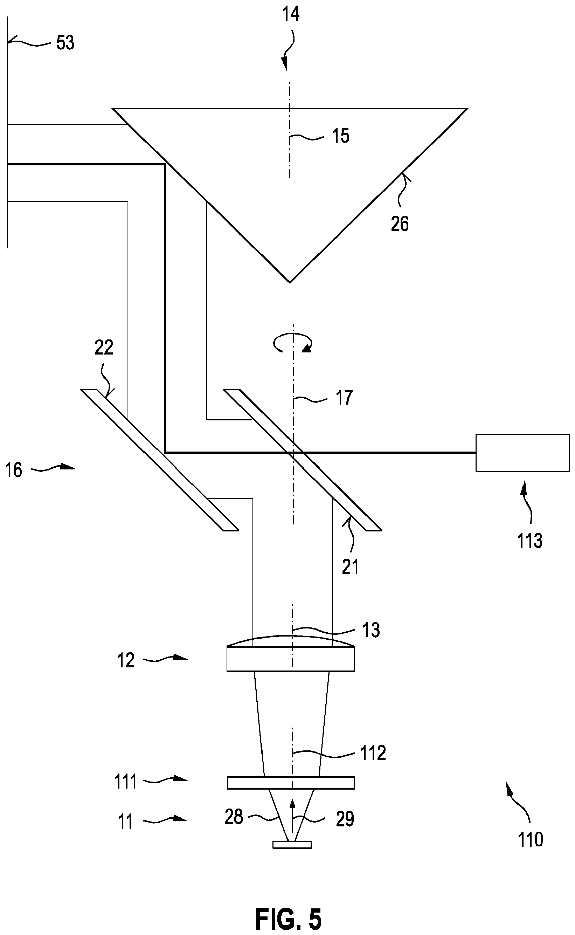

**FIG. 5** zeigt eine fünfte Ausführungsform eines erfindungsgemäßen Lasersystems **110** zur Erzeugung einer linienförmigen Lasermarkierung auf einer Projektionsfläche. Das Lasersystem 110 der FIG. 5, das im Folgenden als fünftes Lasersystem 110 bezeichnet wird, unterscheidet sich vom zweiten Lasersystem 40 der FIG. 2 durch eine zweite Strahlformungsoptik 111, die als Fokussieroptik **111** ausgebildet ist und eine zweite optische Achse **112** aufweist, und eine Distanzmesseinrichtung **113.**

Das fünfte Lasersystem 110 umfasst die Laserstrahlquelle 11, die erste Strahlformungsoptik 12 mit der ersten optischen Achse 13, den Kegelspiegel 14 mit der Kegelachse 15, die Versatzeinrichtung 16 mit der Rotationsachse 17 und die zweite Strahlformungsoptik 111 mit der zweiten optischen Achse 112. Die Komponenten des fünften Lasersystems 110 sind in der Reihenfolge Laserstrahlquelle 11, zweite Strahlformungsoptik 111 (Fokussieroptik), erste Strahlformungsoptik 12 (Kollimationsoptik), Versatzeinrichtung 16 und Kegelspiegel 14 angeordnet.

Die Fokussieroptik 111 ist als verstellbare Fokussieroptik ausgebildet, deren Brennweite verändert werden kann und die eine Veränderung der Divergenz des fokussierten Laserstrahls ermöglicht. Die verstellbare Brennweite der Fokussieroptik 111 hat den Vorteil, dass die Breite der linienförmigen Lasermarkierung auf der Projektionsfläche mittels der Fokussieroptik verändert werden kann. Je schmaler die linienförmige Lasermarkierung auf der Projektionsfläche ist, umso genauer kann der Bediener die Nivellier- oder Markierungsarbeiten ausführen. Außerdem ist eine scharf begrenzte linienförmige Lasermarkierung für den Bediener besser sichtbar, da die verfügbare Leistung von maximal 1 mW auf eine kleinere Fläche verteilt wird und eine höhere Leistungsdichte resultiert.

Um eine scharf begrenzte, schmale Lasermarkierung auf der Projektionsfläche zu erzielen, wird die Brennweite der Fokussieroptik 111 an den Abstand des Lasersystems 110 zur Projektionsfläche angepasst werden. Dazu wird der Abstand zwischen dem fünften Lasersystem 110 und der Projektionsfläche mittels der Distanzmesseinrichtung 113 bestimmt.

## Patentansprüche

1. Lasersystem (10; 40; 60; 90; 110) zur Erzeugung einer linienförmigen Lasermarkierung (38; 54; 88; 104) auf einer Projektionsfläche (37; 53; 87; 103), aufweisend:
▪ eine Laserstrahlquelle (11; 61), die einen Laserstrahl (28; 78) erzeugt und entlang einer Ausbreitungsrichtung (29; 79) aussendet,
▪ eine Versatzeinrichtung (16; 66) mit einer ersten Grenzfläche (21; 71), an der eine erste Umlenkung des Laserstrahls erfolgt, und
▪ einen Kegelspiegel (14; 64), der als gerader Kegel mit einer Kegelachse (15; 65) und einer reflektierenden Mantelfläche (26; 76) ausgebildet ist, wobei der Kegelspiegel (14; 64) im Strahlengang des Laserstrahls hinter der Versatzeinrichtung (16; 66) angeordnet ist,
**dadurch gekennzeichnet, dass** die Versatzeinrichtung (16; 66) um eine Rotationsachse (17; 67) drehbar ausgebildet ist, wobei die Rotationsachse (17; 67) koaxial zur Kegelachse (15; 65) angeordnet ist.

2. Lasersystem nach Anspruch 1, **dadurch gekennzeichnet, dass** die Versatzeinrichtung (16; 66) eine zweite Grenzfläche (22; 72) umfasst, an der eine zweite Umlenkung des Laserstrahls erfolgt, wobei die Ausbreitungsrichtung (29; 79) eines in die Versatzeinrichtung (16; 66) eintretenden Laserstrahls parallel zur Ausbreitungsrichtung (34; 84) eines aus der Versatzeinrichtung (16; 66) austretenden Laserstrahls angeordnet ist.

3. Lasersystem nach einem der Ansprüche 1 bis 2, **dadurch gekennzeichnet, dass** das Lasersystem (10; 40; 60; 90) eine als Kollimationsoptik (12; 62) ausgebildete erste Strahlformungsoptik mit einer ersten optischen Achse (13; 63) aufweist, wobei die erste optische Achse (13; 63) parallel zur Kegelachse (15; 65) ausgerichtet ist.

4. Lasersystem nach einem der Ansprüche 3, **dadurch gekennzeichnet, dass** das Lasersystem (40; 90; 110) eine als Fokussieroptik (41; 91; 111) mit einer Brennweite ausgebildete zweite Strahlformungsoptik mit einer zweiten optischen Achse (42; 92; 112) aufweist, wobei die zweite Strahlformungsoptik im Strahlengang des Laserstrahls zwischen der Laserstrahlquelle (11; 61) und der ersten Strahlformungsoptik (12; 62) angeordnet ist und die zweite optische Achse (42; 92) parallel zur Kegelachse (15; 65) ausgerichtet ist.

5. Lasersystem nach Anspruch 4, **dadurch gekennzeichnet, dass** die Brennweite der Fokussieroptik (111) verstellbar ist.

6. Lasersystem nach einem der Ansprüche 2 bis 5, **dadurch gekennzeichnet, dass** die Versatzeinrichtung als reflektierende Versatzeinrichtung (16) ausgebildet ist und die Umlenkung des Laserstrahls an der ersten Grenzfläche (21) und zweiten Grenzfläche (22) durch Reflexion erfolgt.

7. Lasersystem nach Anspruch 6, **dadurch gekennzeichnet, dass** die erste Grenzfläche (21) um eine erste Kippachse (23) und/oder die zweite Grenzfläche (22) um eine zweite Kippachse (24) verstellbar ausgebildet ist, wobei die erste Kippachse (23) und/oder die zweite Kippachse (24) senkrecht zur Rotationsachse (17) ausgerichtet sind.

8. Lasersystem nach einem der Ansprüche 1 bis 7, **dadurch gekennzeichnet, dass** das Lasersystem (110) eine Distanzmesseinrichtung (113) aufweist, wobei die Distanzmesseinrichtung (113) geeignet ist, einen Abstand des Lasersystems (110) zur Projektionsfläche zu bestimmen.
